# EUROPEAN PATENT APPLICATION

(11) **EP 3 651 000 A1**
(43) Date of publication of application: **13.05.2020**
(21) Application number: 19185951.1
(22) Date of filing: 12.07.2019
(51) Int. Cl.: G06F 3/041, G06K 9/00, G06F 21/32

(54) **FINGERPRINT CAPTURING METHOD, FINGERPRINT CAPTURING APPARATUS, ELECTRONIC DEVICE, AND STORAGE MEDIUM**

(30) Priority: 08.11.2018 CN 201811325151
(71) Applicant: GUANGDONG OPPO MOBILE TELECOMMUNICATIONS CORP., LTD., Wusha, Chang'an Dongguan, Guangdong 523860 (CN)
(72) Inventor: YUAN, Shilin, Dongguan, Guangdong 523860 (CN)
(74) Representative: Manitz Finsterwald Patent- und Rechtsanwaltspartnerschaft mbB

(57) **Abstract**

A fingerprint capturing method, a fingerprint capturing apparatus, an electronic device, and a storage medium are disclosed. The fingerprint capturing method may be applied to an electronic device including a touch screen. The fingerprint capturing method includes: when a luminance of a fingerprint capturing area of the touch screen is a first luminance value, adjusting the luminance of the fingerprint capturing area to a second luminance value in response to detecting a touch operation on the fingerprint capturing area; and capturing a fingerprint image corresponding to the touch operation under the second luminance value via a fingerprint sensor, wherein the fingerprint sensor is disposed below the fingerprint capturing area.

## Description

### Technical Field

The present disclosure relates to, but is not limited to, the technical field of electronics, in particular to a fingerprint capturing method, a fingerprint capturing apparatus, an electronic device, and a storage medium.

### Background

The principle of capturing a fingerprint on a screen is that light emitted by a touch screen is used to illuminate a fingerprint on the touch screen, the light emitted by the touch screen reflects when it reaches the fingerprint, a fingerprint sensor disposed below the touch screen receives signals of the reflected light, fingerprints have rugged texture, and amplitudes of light absorption are different, thus a fingerprint image with different shades is obtained. The collection of fingerprints on the screen is implemented through the light emitted by the touch screen, which may cause a problem of power consumption.

### Summary

Embodiments of the present disclosure provide a fingerprint capturing method, a fingerprint capturing apparatus, an electronic device, and a storage medium.

In one aspect, a fingerprint capturing method is provided. The fingerprint capturing method may be applied to an electronic device including a touch screen. The fingerprint capturing method includes actions of: when a luminance of a fingerprint capturing area of the touch screen is a first luminance value, adjusting the luminance of the fingerprint capturing area to a second luminance value in response to detecting a touch operation on the fingerprint capturing area, wherein the second luminance value is greater than the first luminance value; and capturing a fingerprint image corresponding to the touch operation under the second luminance value via a fingerprint sensor, wherein the fingerprint sensor is disposed below the fingerprint capturing area.

In another aspect, a fingerprint capturing apparatus is provided. The fingerprint capturing apparatus may be applied to an electronic device comprising a touch screen, the touch screen includes a fingerprint capturing area, and the apparatus includes: a processing unit, used for illuminating the fingerprint capturing area to a first luminance value; an interrupt triggering unit, used for transmitting an interrupt request to the processing unit in response to detecting a touch operation on the fingerprint capturing area; wherein the processing unit is further used for adjusting a luminance of the fingerprint capturing area to a second luminance value after receiving the interrupt request, and instructing a fingerprint capturing unit to capture a fingerprint image, wherein the second luminance value is greater than the first luminance value; and the fingerprint capturing unit, used for capturing the fingerprint image irradiated by light emitted from the fingerprint capturing area.

In another aspect, an electronic device is provided. The electronic device includes a touch screen, a processor and a storage storing one or more computer programs. The computer programs may be executable by the processor to perform the fingerprint capturing method.

In yet another aspect, a non-transitory computer readable storage medium including computer programs is provided. The computer programs may be executable by a computer to perform the fingerprint capturing method.

The nature and advantages of embodiments of the present disclosure may be better understood with reference to the following detailed description and accompanying drawings.

### Brief Description of Drawings

The accompanying drawings are intended to provide a further understanding of the technical solutions of the present disclosure and form a part of the specification, and are used together with the embodiments of the present disclosure to explain the technical solutions of the present disclosure but do not constitute limitations on the technical solutions of the present disclosure.
FIG. 1 is a flowchart of a fingerprint capturing method according to an embodiment of the present disclosure.
FIG. 2 is an exemplary schematic diagram of a mobile terminal according to an embodiment of the present disclosure.
FIG. 3 is an exemplary flowchart of a fingerprint capturing method according to an embodiment of the present disclosure.
FIG. 4 is an exemplary flowchart of a fingerprint capturing method according to another embodiment of the present disclosure.
FIG. 5 is a schematic diagram of a terminal according to an embodiment of the present disclosure.
FIG. 6 is a schematic diagram of a fingerprint capturing apparatus according to an embodiment of the present disclosure.

### Detailed Description

The technical solutions of the present disclosure are clearly and completely described with reference to the accompanying drawings, in order to make the present disclosure more clearly understood. The described embodiments are only part, but not all, of the embodiments of the present disclosure. Based on the embodiments of the present disclosure, all other embodiments acquired by those skilled in the art without creative work are within the scope of the present disclosure.

The terms "first", "second", "third", and "fourth" in the specification and claims of the present disclosure and the appended drawings are used for distinguishing different objects, not to describe a particular order. In addition, the terms "include", "have", and any distortion of them are intended to cover exclusive inclusions. For example, a process, a method, a system, a product, or a device that contains a series of actions or units, are not limited to the listed actions or units, and may optionally include actions or units that are not listed, or may optionally include other actions or units inherent to the process, the method, the product, or the device.

The "embodiment" herein means that specific features, structures, or characteristics described in connection with the embodiment may be included in at least an embodiment of the present disclosure. The phrase "embodiment" appearing at various locations in the specification does not necessarily refer to the same embodiment, nor is an independent or alternative embodiment that is mutually exclusive from other embodiment. It is explicitly and implicitly understood by those skilled in the art that the embodiment described herein may be combined with other embodiment.

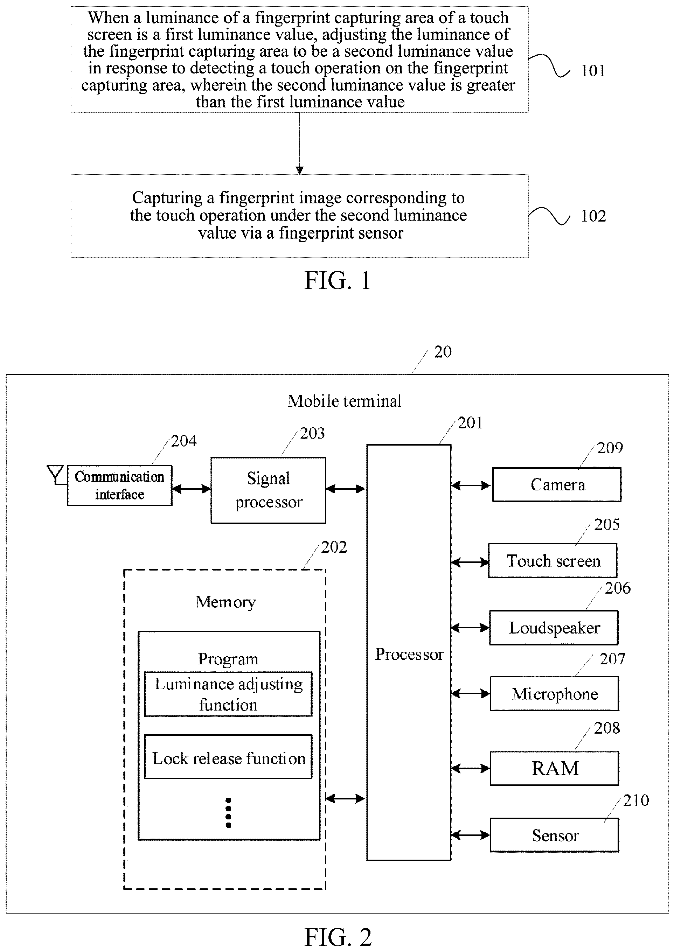

FIG. 1 is a flowchart of a fingerprint capturing method according to an embodiment of the present disclosure. The fingerprint capturing method provided in the embodiment of the present disclosure may be applied to an electronic device. The electronic device includes a touch screen, wherein the touch screen may include a fingerprint capturing area.

The electronic device may include a finger sensor. The present disclosure is not limited thereto.

The fingerprint sensor may be disposed below the fingerprint capturing area, wherein the fingerprint sensor may be located at a position directly below the fingerprint capturing area, a position at the lower left of the fingerprint capturing area, or a position at the lower right of the fingerprint capturing area, as long as the fingerprint sensor is located at a position where the fingerprint image can be accurately collected.

As shown in FIG. 1, the fingerprint capturing method in the embodiment may include actions 101 to 102.

In action 101, when a luminance of a fingerprint capturing area of the touch screen is a first luminance value, the luminance of the fingerprint capturing area is adjusted to be a second luminance value in response to detecting a touch operation on the fingerprint capturing area, wherein the second luminance value is greater than the first luminance value.

In action 102, a fingerprint image corresponding to the touch operation under the second luminance value is captured via a fingerprint sensor, wherein the fingerprint sensor is disposed below the fingerprint capturing area.

In the embodiment of the present disclosure, the fingerprint capturing area is firstly illuminated to a lower luminance value (that is the first luminance value), wherein the first luminance value may be a predetermined luminance value of the electronic device for normal working, and when the fingerprint capturing area is touched, the luminance of the fingerprint capturing area or the entire touch screen is increased, thereby reducing power consumption.

Furthermore, compared with a fingerprint capturing operation in the case where the luminance value of the fingerprint capturing area is the first luminance value, after the luminance of the fingerprint capturing area is increased, the fingerprints are captured, thereby improving the quality of captured fingerprint images.

If the fingerprint capturing area is touched, the luminance value of the fingerprint capturing area or the entire touch screen is increased to the second luminance value, and a luminance value of the fingerprint capturing area increased for a fingerprint capturing operation may be different from the second luminance value.

In an exemplary embodiment, the fingerprint capturing method may further include: in response to detecting the touch operation of the at least one finger on the fingerprint capturing area, determining a touch position of the at least one finger on the fingerprint capturing area. In the action 101, adjusting the luminance of the fingerprint capturing area to the second luminance value may include: adjusting the luminance of the touch position to the second luminance value. In the exemplary embodiment, when the fingerprint capturing area is touched, just the luminance of the touch position of the finger is increased, which may further reduce the power consumption.

In an exemplary embodiment, the fingerprint capturing method may further include: in response to adjusting the luminance of the touch position to the second luminance value, adjusting the luminance of an area in the fingerprint capturing area except the touch position to a third luminance value which is lower than the first luminance value or the second luminance value. In the exemplary embodiment, when the fingerprint capturing area is touched, the luminance of rest areas in the fingerprint capturing area except the touch position may be lowered at the same time that the luminance of the touch position of the finger is increased, which may further reduce the power consumption.

In an exemplary embodiment, the fingerprint capturing area is illuminated to the first luminance value under at least one of the following conditions: the touch screen displays a lock release interface, a predetermined touch operation on the touch screen is detected, a pressing operation on a HOME button is detected, a predetermined gesture is detected, and a predetermined tapping signal is detected. In the exemplary embodiment, the fingerprint capturing area is illuminated only under certain conditions, which may prevent the fingerprint capturing area from being illuminated always and avoid affecting the display life of the fingerprint capturing area, thereby improving the performance of the electronic device.

In an exemplary embodiment, after the action 102, the fingerprint capturing method may further include: parsing the fingerprint image of at least one finger performing the touch operation to obtain at least one fingerprint feature set, wherein the at least one fingerprint feature set may correspond to the finger one by one; when the number of the fingers is greater than or equal to two, determining the fingerprint feature set with the most fingerprint features as a target fingerprint feature set, and matching the target fingerprint feature set with pre-stored fingerprint feature sets. Wherein, when the target fingerprint feature set matches a pre-stored fingerprint feature set, a lock release operation may be performed. The exemplary embodiment may improve an efficiency of fingerprint identification.

In an exemplary embodiment, the fingerprint capturing method may further include: when the target fingerprint feature set matches a pre-stored fingerprint feature set, performing at least one action of: starting applications corresponding to the number of the fingers touched on the fingerprint capturing area; starting an application corresponding to the target fingerprint feature set starting an application corresponding to a touch position that corresponds to the target fingerprint feature set; displaying a system desktop on the touch screen and displaying an application icon of a target application. The exemplary embodiment may improve a portability of startup of the application.

In an exemplary embodiment, the fingerprint capturing method may further include: when a luminance of a fingerprint capturing area of the touch screen is a first luminance value, adjusting the luminance of an area in the touch screen except the fingerprint capturing area to a fourth luminance value which is lower than the first luminance value or the second luminance value. For example, the area in the touch screen except the fingerprint capturing area may be maintained in an off-screen state. In the exemplary embodiment, when the fingerprint capturing area is illuminated, rest areas of the touch screen may be illuminated to a lower luminance or maintained in an off-screen state, thereby reducing power consumption.

In an exemplary embodiment, the electronic device may further include a processor, and the touch screen may further include a touch panel. The fingerprint capturing method of the exemplary embodiment may include: the processor illuminates the fingerprint capturing area to the first luminance value; adjusting the luminance of the fingerprint capturing area to the second luminance value, and capturing the fingerprint image corresponding to the touch operation under the second luminance value via the fingerprint sensor, includes:, the touch panel of the touch screen transmits an interrupt request to the processor; after receiving the interrupt request, the processor adjusts the luminance of the fingerprint capturing area to the second luminance value and instructs the fingerprint sensor to capture the fingerprint image; and the fingerprint sensor captures the fingerprint image of at least one finger irradiated to light emitted from the fingerprint capturing area.

In an exemplary embodiment, the fingerprint capturing method may be applied to a mobile terminal. FIG. 2 is an exemplary schematic diagram of a mobile terminal according to an embodiment of the present disclosure. As shown in FIG. 2, a mobile terminal 20 may include a processor 201, a memory 202, a signal processor 203, a communication interface 204, a touch screen 205, a loudspeaker 206, a microphone 207, a Random Access Memory (RAM) 208, a camera 209, a sensor 210, and etc.

The processor 201 may be an Application Processor (AP), or may be other processors. The present disclosure is not limited thereto.

The memory 202, the signal processor 203, the touch screen 205, the loudspeaker 206, the microphone 207, the RAM 208, the camera 209, and the sensor 210 may all be connected with the processor 201, and the communication interface 204 may be connected with the signal processor 203.

The touch screen 205 may include a display and a touch panel (TP), and the touch screen 205 may include a fingerprint capturing area. The fingerprint capturing area may be one portion of the touch screen 205, or may be the whole of the touch screen 205, which is not limited thereto. On the condition that the fingerprint capturing area is one portion of the touch screen 205, the fingerprint capturing area may be in the middle of the touch screen 205, at the upper-left corner of the touch screen 205, at the upper-right corner of the touch screen 205, or at the lower-left corner of the touch screen 205, etc., which is not limited thereto.

The sensor 210 may include a fingerprint sensor, an infrared sensor, or a gyroscope, etc. The fingerprint sensor may be disposed below the fingerprint capturing area.

In the embodiment, the processor 201 may be used to illuminate the fingerprint capturing area to a first luminance value; the touch panel of the touch screen 205 may be used to transmit an interrupt request to the processor 201 in response to detecting a touch operation of at least one finger on the fingerprint capturing area; in response to receiving the interrupt request, the processor 201 may further be used to adjust the luminance of the fingerprint capturing area to a second luminance value which is greater than the first luminance value and instruct the fingerprint sensor to capture a fingerprint image; and the fingerprint sensor may be used to capture the fingerprint image of the at least one finger irradiated to light emitted from the fingerprint capturing area.

In the embodiment of the present disclosure, the fingerprint capturing area is first illuminated to a lower luminance value, wherein the lower luminance value may be a predetermined luminance value of the mobile terminal for normal working, and when the fingerprint capturing area is touched, the luminance of the fingerprint capturing area or the entire touch screen is increased, thereby reducing power consumption.

Furthermore, compared with a fingerprint capturing operation in the case where the luminance value of the fingerprint capturing area is the first luminance value, after the luminance of the fingerprint capturing area is increased, the fingerprints are captured, thereby improving the quality of the captured fingerprint images.

If the fingerprint capturing area is touched, the luminance value of the fingerprint capturing area or the entire touch screen is increased to the second luminance value, and a luminance value of the fingerprint capturing area increased for a fingerprint capturing operation may be different from the second luminance value.

In an exemplary embodiment of the present disclosure, the processor 201 may be used for determining the touch position of the at least one finger after receiving the interrupt request; and the processor 201 may adjust the luminance of the fingerprint capturing area to the second luminance value by adjusting the luminance of the touch position to the second luminance value.

In an exemplary embodiment of the present disclosure, the processor 201 may further be used for adjusting the luminance of an area in the fingerprint capturing area except the touch position to a third luminance value which is lower than the first luminance value or the second luminance value, in response to adjusting the luminance of the touch position to the second luminance value.

In an exemplary embodiment of the present disclosure, the processor 201 may illuminate the fingerprint capturing area to the first luminance value by the following means: under a first condition, the processor 201 illuminates the fingerprint capturing area to the first luminance value. The first condition may include at least one of the followings: the touch screen 205 currently displays a lock release interface, a predetermined touch operation on the touch screen 205 is detected, a pressing operation on a HOME button is detected, a predetermined gesture is detected, and a predetermined tapping signal is detected.

In an exemplary embodiment of the present disclosure, after the fingerprint sensor captures the fingerprint image of the at least one finger under the second luminance value, the processor 201 may further be used for parsing the fingerprint image of the at least one finger to obtain at least one fingerprint feature set which corresponds to the at least one finger one by one; when the number of the fingers is greater than or equal to two, determining a fingerprint feature set with the most fingerprint features as a target fingerprint feature set and matching the target fingerprint feature set with pre-stored fingerprint feature sets; and when the target fingerprint feature set matches a pre-stored fingerprint feature set, performing a lock release operation.

In an exemplary embodiment of the present disclosure, after the processor 201 performs the lock release operation, the processor 201 may further be used for starting applications corresponding to the number of the fingers touched on the fingerprint capturing area, or starting an application corresponding to the target fingerprint feature set.

In an exemplary implementation of the present disclosure, after the processor 201 performs the lock release operation, the processor 201 may further be used for controlling the touch screen 205 to display a system desktop, and controlling the fingerprint capturing area to display an application icon of a target application. The target application may include at least one of the followings: the application to which the target fingerprint feature set corresponds, an application used before the screen of the mobile terminal is locked, an application whose cumulative usage times are greater than or equal to a predetermined threshold, and an application matching the first condition.

It should be noted that implementation processes of the actions performed by each module may be referred to implementation processes described in the following method, which may not be described in detail here.

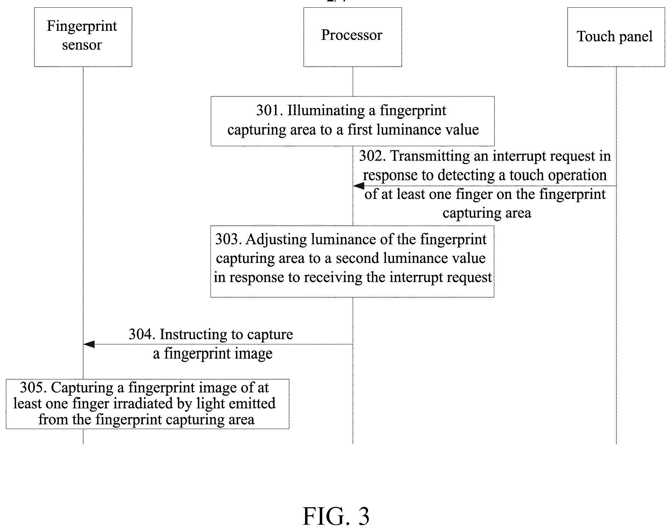

FIG. 3 is an exemplary flowchart of a fingerprint capturing method according to an embodiment of the present disclosure. In FIG. 3, the fingerprint capturing method in the exemplary embodiment may be applied to the mobile terminal as shown in FIG. 2. The fingerprint capturing method in the exemplary embodiment may include actions 301 to 305.

In action 301, a processor illuminates a fingerprint capturing area of a touch screen to a first luminance value.

When the luminance of the fingerprint capturing area of the touch screen is the first luminance value and in response to detecting a touch operation on the fingerprint capturing area, the processor may illuminate an area in the touch screen except the fingerprint capturing area to a fourth luminance value, wherein the fourth luminance value is lower than the first luminance value or the second luminance value, or the processor may keep the area in the touch screen except the fingerprint capturing area in an off-screen state.

The first luminance value may be a display luminance value of the touch screen currently set by a mobile terminal, or may be a predetermined luminance value, which is not limited thereto.

In action 302, in response to detecting a touch operation of at least one finger on the fingerprint capturing area, a touch panel (TP) of the touch screen may transmit an interrupt request to the processor.

For example, the touch operation may be a pressing operation, a clicking operation, or a sliding operation.

When the touch screen is in an off-screen state, the interrupt request transmitted from the touch panel to the processor is used to trigger the processor to illuminate the touch screen. In the embodiment of the present disclosure, since the fingerprint capturing area has been illuminated before the fingerprint capturing area is touched, and the mobile terminal is currently in a lock-screen state, in this case, the interrupt request is used to trigger the processor to increase the luminance of the fingerprint capturing area.

In action 303, after receiving the interrupt request, the processor adjusts the luminance of the fingerprint capturing area to a second luminance value which is greater than the first luminance value.

The second luminance value may be user-defined or determined by the mobile terminal, which is not limited here. The implementation manners that the mobile terminal determines the second luminance value may include: the mobile terminal determines current ambient luminance of the mobile terminal, and then determines the second luminance value to which the current ambient luminance corresponds based on a mapping relationship between ambient luminance and the luminance of the fingerprint capturing area; or the mobile terminal determines a current geographical location of the mobile terminal, and then determines the second luminance value to which the current geographical location corresponds based on a mapping relationship between the geographical location and the luminance of the fingerprint capturing area.

In action 304, the processor instructs the fingerprint sensor to capture the fingerprint image.

The implementation manners that the processor instructs the fingerprint sensor to capture the fingerprint image may include: the processor transmits an instruction to the fingerprint sensor for indicating the fingerprint sensor to capture the fingerprint image.

In action 305, the fingerprint sensor captures the fingerprint image of the at least one finger irradiated to light emitted from the fingerprint capturing area.

In the embodiment of the present disclosure, the fingerprint capturing area may be first illuminated to a lower luminance value (that is the first luminance value), wherein the first luminance value may be a predetermined luminance value of the mobile terminal for normal working, and when the fingerprint capturing area is touched, the luminance of the fingerprint capturing area or the entire touch screen may be increased, thereby reducing power consumption.

Furthermore, compared with a fingerprint capturing operation in the case where the luminance value of the fingerprint capturing area is the first luminance value, after the luminance of the fingerprint capturing area is increased, the fingerprints may be captured, thereby improving the quality of the captured fingerprint images.

If the fingerprint capturing area is touched, the luminance value of the fingerprint capturing area or the entire touch screen is increased to the second luminance value, and a luminance value of the fingerprint capturing area increased for a fingerprint capturing operation may be different from the second luminance value.

In an exemplary embodiment of the present disclosure, the fingerprint capturing method may further include: after receiving the interrupt request, the processor determines a touch position of the at least one finger in the fingerprint capturing area. That the processor adjusts the luminance of the fingerprint capturing area to the second luminance value may include: the processor adjusts the luminance of the touch position to the second luminance value.

In the exemplary embodiment of the present disclosure, when the fingerprint capturing area is touched, only the luminance of the touch position touched by the finger is increased, further to reduce the power consumption.

In an exemplary embodiment of the present disclosure, the fingerprint capturing method may further include: in response to adjusting the luminance of the touch position to the second luminance, the processor adjusts an area in the touch position except the fingerprint capturing area to a third luminance value which is lower than the first luminance value or the second luminance value.

The third luminance value may be the lowest luminance value that the touch screen can display, or may be zero (that is a black screen), which is not limited here.

In the exemplary embodiment of the present disclosure, the luminance of the touch position touched by the finger is increased at the same time that the luminance of rest areas in the fingerprint capturing area except the touch position is lowered, further to reduce the power consumption.

In an exemplary embodiment of the present disclosure, that the processor illuminates the fingerprint capturing area to the first luminance value may include that the processor illuminates the fingerprint capturing area to the first luminance value under a first condition. The first condition may include at least one of the followings: the touch screen currently displays a lock release interface, a predetermined touch operation on the touch screen is detected, a pressing operation on a HOME button is detected, a predetermined gesture is detected, and a predetermined tapping signal is detected.

The lock release interface of the mobile terminal is different from a lock screen interface. A piece of lock screen wallpaper is displayed on the lock screen interface, and a lock release prompt is displayed on the lock release interface. For example, when verification information needed by unlocking is a digital password, numeric keys from 0 to 9 may be displayed on the lock release interface, as well as a prompt text of inputting a password. For another example, when the verification information needed by unlocking is a fingerprint, a fingerprint capturing area may be displayed on the lock release interface, and a prompt text of inputting a fingerprint may be displayed in the fingerprint capturing area.

The predetermined touch operation may be user-defined or self-defined by the mobile terminal, which is not limited here. For example, the predetermined touch operation may include a clicking operation, a multi-clicking operation, a sliding operation (such as a leftward sliding operation, a rightward sliding operation, a upward sliding operation, or a downward sliding operation), a first clicking operation and then a sliding operation, a first multi-clicking operation and then a sliding operation, a first sliding operation and then a clicking operation, or a first sliding operation and then a multi-clicking operation.

The predetermined gesture may be user-defined or self-defined by the mobile terminal, which is not limited here. For example, the predetermined gesture may include a calling gesture, a finger-clicking gesture, a sliding gesture, an OK gesture, the OK gesture first and then the finger-clicking gesture, or the finger-clicking gesture first and then the OK gesture.

The predetermined tapping signal may be user-defined or self-defined by the mobile terminal, which is not limited here. The tapping signal may include at least one of: tapping times, a tapping frequency, and a tapping action. The tapping action may be one tapping action or include a plurality of tapping actions. When the tapping action includes a plurality of tapping actions, there are at least two different tapping actions in the plurality of tapping actions. The predetermined tapping signal may be input by a user in advance according to a predetermined tapping action and predetermined tapping times. The predetermined tapping action may be a simple tapping action, such as lightly tapping with a finger, or the predetermined tapping action may be a more complicated tapping action, such as first lightly tapping a few times with a first finger and then heavily tapping a few times with a second finger.

In the exemplary embodiment of the present disclosure, the fingerprint capturing area is illuminated under certain conditions, thus preventing the fingerprint capturing area from being illuminated always to affect the display life of the fingerprint capturing area, and improving the performance of the mobile terminal.

In an exemplary embodiment of the present disclosure, the fingerprint capturing method may further include: the processor parses the fingerprint image of the at least one finger to obtain at least one fingerprint feature set which corresponds to the at least one finger one by one, the processor matches each of the fingerprint feature set with pre-stored fingerprint feature sets, and when all of the fingerprint feature sets match a pre-stored fingerprint feature set, the processor performs the lock release operation.

In an exemplary embodiment of the present disclosure, the fingerprint capturing method may further include: the processor parses the fingerprint image of the at least one finger to obtain at least one fingerprint feature set which corresponds to the at least one finger one by one; when the number of the fingers is greater than or equal to two, the processor determines the fingerprint feature set with the most fingerprint features as a target fingerprint feature set and matches the target fingerprint feature set with pre-stored fingerprint feature sets; and when the target fingerprint feature set matches a pre-stored fingerprint feature set, the processor performs the lock release operation.

The fingerprint identification is usually performed by capturing fingerprints and then matching the captured fingerprints with fingerprint templates. However, if pluralities of fingerprints are captured, the efficiency of the fingerprint identification may be reduced. Therefore, in the exemplary embodiment of the present disclosure, when pluralities of fingerprints are captured, the fingerprint identification may be carried out by only using the fingerprints with the more fingerprint features, thereby improving the efficiency of the fingerprint identification.

In one exemplary embodiment, the fingerprint capturing method may further include: when the number of the fingerprint features included by each of the fingerprint feature sets is smaller than a predetermined value, the processor prompts a user to re-enter a fingerprint.

The implementation manner that the processor prompts the user to re-enter the fingerprint may include that the processor controls a display of prompt information in the fingerprint capturing area, and the loudspeaker outputs audio of the prompt information which is used to prompt the user to re-enter the fingerprint, such as "re-enter the fingerprint in the fingerprint capturing area".

In an exemplary embodiment of the present disclosure, after the processor performs the lock release operation, the fingerprint capturing method may further include: the processor starts applications to which the number of the fingers touched on the fingerprint capturing area corresponds, the processor starts an application to which the target fingerprint feature set corresponds, or the processor starts an application to which a touch position corresponding to the target fingerprint feature set corresponds.

In the exemplary embodiment of the present disclosure, after the mobile terminal is successfully unlocked, the applications to which the number of the fingers or one of the fingers corresponds may be started, thereby improving the portability of the startup of the application.

In an exemplary embodiment of the present disclosure, after the processor performs the lock release operation, the fingerprint capturing method may further include that the processor controls the touch screen to display a system desktop, and controls the fingerprint capturing area to display an application icon of a target application. The number of the target application may be one or more, which is not limited here.

In an exemplary embodiment, when there is an application to which the target fingerprint feature set corresponds, the target application may be the application to which the target fingerprint feature set corresponds.

In an exemplary embodiment, when there is no application to which the target fingerprint feature set corresponds, the target application may be an application used before the screen of the mobile terminal is locked, or an application whose cumulative usage times are greater than or equal to a predetermined threshold.

In an exemplary embodiment, when there is no application to which the target fingerprint feature set corresponds, the first condition includes that the predetermined gesture is detected, and the predetermined gesture is a calling gesture, the target application may be an application capable of calling, such as QQ, WeChat, or a telephone application.

With the increase in the variety of applications and the increase in usage time of the mobile terminal, the number of applications installed by users may become greater and greater. In order to keep a system desktop clean, most users may usually place most of the applications in an additional program. Thus when the users want to open an application, they may first enter into the additional program, and then look for the application they want to start, which affects startup speeds of the applications.

In the exemplary embodiment of the present disclosure, since the user unlock the screen by pressing the fingerprint capturing area, the user may directly notice the fingerprint capturing area at a first glance after unlocking. Thus application icons of some applications that may be used by the user may be displayed in the area, which may improve the startup speeds of the applications.

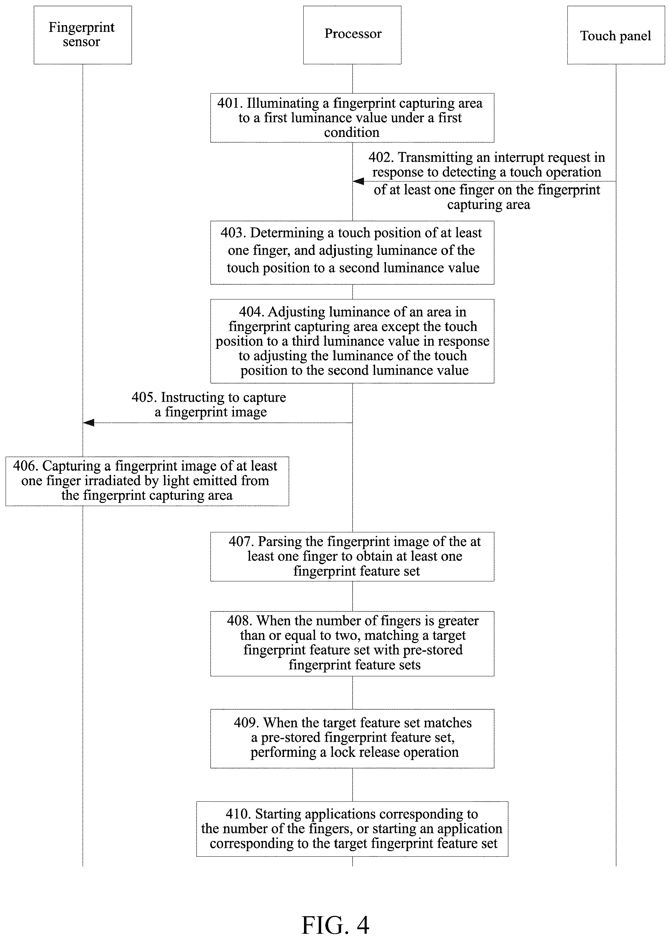

FIG. 4 is an exemplary flowchart of a fingerprint capturing method according to an embodiment of the present disclosure. As shown in FIG. 4, the fingerprint capturing method in the embodiment may be applied to the mobile terminal in FIG. 2. The fingerprint capturing method in the embodiment may include actions 401 to 410.

In action 401, a processor illuminates a fingerprint capturing area to a first luminance value under a first condition. The first condition may include at least one of the followings: a touch screen currently displays a lock release interface, a predetermined touch operation on the touch screen is detected, a pressing operation on a HOME button is detected, a predetermined gesture is detected, and a predetermined tapping signal is detected.

In action 402, when a luminance of the fingerprint capturing area of the touch screen is the first luminance value, a touch panel (TP) of the touch screen transmits an interrupt request to the processor in response to a touch operation of at least one finger on the fingerprint capturing area.

In action 403, after receiving the interrupt request, the processor determines a touch position of the at least one finger, and adjusts luminance of the touch position to a second luminance value which is greater than the first luminance value.

In action 404, in response to adjusting the luminance of the touch position to the second luminance value, the processor adjusts an area in the fingerprint capturing area except the touch position to a third luminance value which is lower than the first luminance value or the second luminance value.

In action 405, the processor instructs a fingerprint sensor to capture a fingerprint image.

In action 406, the fingerprint sensor captures the fingerprint image of the at least one finger irradiated to light emitted from the fingerprint capturing area.

In action 407, the processor parses the fingerprint image of the at least one finger to obtain at least one fingerprint feature set which corresponds to the at least one finger one by one.

In action 408, when the number of the fingers is greater than or equal to two, the processor determines the fingerprint feature set with the most fingerprint features as a target fingerprint feature set, and matches the target fingerprint feature set with pre-stored fingerprint feature sets.

In action 409, when the target fingerprint feature set matches a pre-stored fingerprint feature set, the processor may perform a lock release operation.

In action 410, the processor starts applications to which the number of the fingers corresponds, or starts an application to which the target fingerprint feature set corresponds.

It should be noted that the implementation processes of the present embodiment may be referred to the implementation processes described in the method embodiment shown in FIG. 3, which may not be described in detail here.

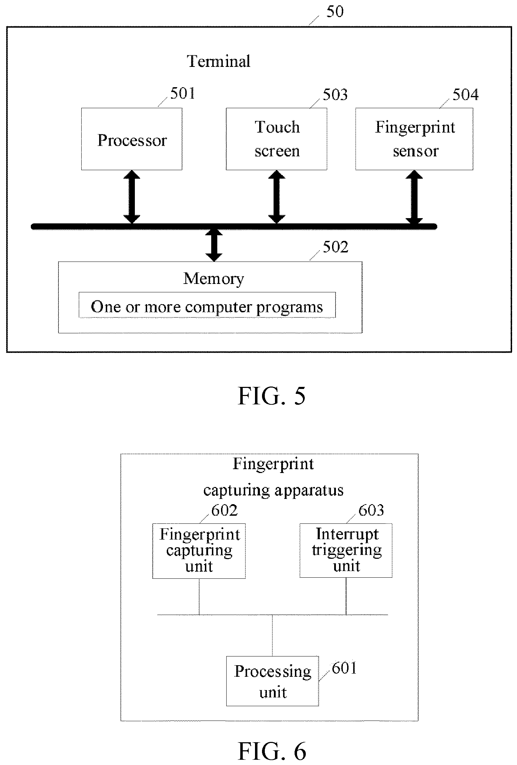

FIG. 5 is a schematic diagram of a terminal according to an embodiment of the present disclosure. As shown in FIG. 5, a terminal 50 in the embodiment may include a touch screen 503, a processor 501, a fingerprint sensor 504, and a memory 502 storing one or more computer programs, the touch screen 503 may include a fingerprint capturing area, and the fingerprint sensor 504 may be disposed below the fingerprint capturing area. The computer programs may be configured to be executable by the processor 501 to perform the following actions of: when a luminance of a fingerprint capturing area of the touch screen is a first luminance value, adjusting the luminance of the fingerprint capturing area to a second luminance value in response to detecting a touch operation on the fingerprint capturing area, wherein the second luminance value is greater than the first luminance value; and capturing a fingerprint image corresponding to the touch operation under the second luminance value via the fingerprint sensor.

In an exemplary embodiment, in response to detecting the touch operation on the fingerprint capturing area, adjusting the luminance of the fingerprint capturing area to the second luminance may include: in response that a touch panel of the touch screen detects the touch operation of the at least one finger on the fingerprint capturing area, receiving an interrupt request transmitted by the touch panel, and adjusting the luminance of the fingerprint capturing area to the second luminance value.

In an exemplary embodiment of the present disclosure, the computer programs may be executable by the processor to further perform actions of: after receiving the interrupt request, determining a touch position of the at least one finger. The action of adjusting the luminance of the fingerprint capturing area to the second luminance value may include: adjusting the luminance of the touch position to the second luminance value.

In an exemplary embodiment of the present disclosure, the computer programs may be executable by the processor to further perform actions of: in response to adjusting the luminance of the touch position to the second luminance value, adjusting the luminance of an area in the touch position except the fingerprint capturing area to a third luminance value which is lower than the first luminance value or the second luminance value.

In an exemplary embodiment of the present disclosure, the action of illuminating the fingerprint capturing area to the first luminance value may include: under a first condition, illuminating the fingerprint capturing area to the first luminance value. The first condition may include at least one of the following conditions: the touch screen currently displays a lock release interface, a predetermined touch operation on the touch screen is detected, a pressing operation on a HOME button is detected, a predetermined gesture is detected, and a predetermined tapping signal is detected.

In an exemplary embodiment of the present disclosure, the computer programs may be executable by the processor to further perform actions of: after the fingerprint sensor captures the fingerprint image of the at least one finger under the second luminance value, parsing the fingerprint image of the at least one finger to obtain at least one fingerprint feature set which corresponds to the at least one finger one by one; when the number of the fingers is greater than or equal to two, determining the fingerprint feature set with the most fingerprint features as a target fingerprint feature set and matching the target fingerprint feature set with pre-stored fingerprint feature sets; and when the target fingerprint feature set matches a pre-stored fingerprint feature set, performing a lock release operation.

In an exemplary embodiment of the present disclosure, the computer programs may be executable by the processor to further perform at least one action of: after performing the lock release operation, starting applications corresponding to the number of the fingers, or starting an application corresponding to the target fingerprint feature set.

In an exemplary embodiment of the present disclosure, the computer programs may be executable by the processor to further perform actions of: after performing the lock release operation, controlling the touch screen to display a system desktop, and controlling the fingerprint capturing area to display an application icon of a target application.

It should be noted that the implementation processes of the present embodiment may be referred to the implementation processes described in the above-mentioned method embodiment, which may not be described in detail here.

The above embodiments mainly introduce the embodiments of the present disclosure from the perspective of the method execution processes. It can be understood that in order to achieve the above functions, the electronic device may include corresponding hardware structures and/or software modules to perform corresponding functions. Those skilled in the art may easily realize that in connection with the units and algorithm actions of the examples described in the embodiments disclosed herein, the present disclosure can be implemented in a form of hardware or a combination of the hardware and computer software. Whether a function is implemented by the hardware or hardware driven by computer software depends on particular applications and design constraints of the technical solutions. Professional technicians may use different methods to implement the described functions for each particular application, but such implementation should not be considered beyond the scope of the present disclosure.

The embodiments of the present disclosure may divide the electronic device into functional units according to the method examples. For example, each functional unit may be divided according to each function, or two or more functions may be integrated into one unit. The integrated unit may be realized either in the form of hardware or in a form of software functional units. It should be noted that divisions of units in the embodiments are schematic and are only logical functional divisions, and there may be other ways of dividing in actual implementations.

FIG. 6 is a schematic diagram of a fingerprint capturing apparatus according to an embodiment of the present disclosure. As shown in FIG. 6, the fingerprint capturing apparatus in the embodiment may be applied to a terminal, and the fingerprint capturing apparatus in the embodiment may include a processing unit 601 and a fingerprint capturing unit 602. The processing unit 601 may be configured to illuminate a fingerprint capturing area of a touch screen to a first luminance value, and when a luminance of the fingerprint capturing area of the touch screen is the first luminance value, adjust the luminance of the fingerprint capturing area to a second luminance value in response to detecting a touch operation of at least one finger on the fingerprint capturing area, and instruct the fingerprint capturing unit 602 to capture a fingerprint image. The fingerprint capturing unit 602 may be configured to capture the fingerprint image of the at least one finger irradiated to light emitted from the fingerprint capturing area. The second luminance value may be greater than the first luminance value.

In an exemplary embodiment, the fingerprint capturing apparatus in the embodiment may further include an interrupt triggering unit 603 which is configured to transmit an interrupt request to the processing unit 601 in response to detecting the touch operation of the at least one finger on the fingerprint capturing area. The processing unit 601 may be configured to adjust the luminance of the fingerprint capturing area to the second luminance value and instruct the fingerprint capturing unit 602 to capture the fingerprint image, after receiving the interrupt request.

In an exemplary embodiment of the present disclosure, the processing unit 601 may further be configured to determine a touch position of the at least one finger after receiving the interrupt request. The processing unit 601 may adjust the luminance of the fingerprint capturing area to the second luminance value by adjusting the luminance of the touch position to the second luminance value.

In an exemplary embodiment of the present disclosure, the processing unit 601 may further be configured to, in response to adjusting the luminance of the touch position to the second luminance value, adjust the luminance of an area in the fingerprint capturing area except the touch position to a third luminance value which is lower than the first luminance value or the second luminance value.

In an exemplary embodiment of the present disclosure, the processing unit 601 may illuminate the fingerprint capturing area to the first luminance value by illuminating the fingerprint capturing area to the first luminance value under a first condition. The first condition may include at least one of the followings: the touch screen currently displays a lock release interface, a predetermined touch operation on the touch screen is detected, a pressing operation on a HOME button is detected, a predetermined gesture is detected, and a predetermined tapping signal is detected.

In an exemplary embodiment of the present disclosure, the processing unit 601 may further be configured to: parse a fingerprint image of the at least one finger to obtain at least one fingerprint feature set which corresponds to the at least one finger one by one, after the fingerprint capturing unit 602 captures the fingerprint image of the at least one finger irradiated to the light emitted from the fingerprint capturing area; when the number of the fingers is greater than or equal to two, determine a fingerprint feature set with the most fingerprint features as a target fingerprint feature set and match the target fingerprint feature set with pre-stored fingerprint feature sets; and when the target fingerprint feature set matches a pre-stored fingerprint feature set, perform a lock release operation.

In an exemplary embodiment of the present disclosure, the processing unit 601 may further be configured to start applications to which the number of the fingers corresponds or start an application to which the target fingerprint feature set correspond after performing the lock release operation.

In an exemplary embodiment of the present disclosure, the processing unit 601 may further be configured to display a system desktop on the touch screen, and display an application icon of a target application on the fingerprint capturing area, after performing the lock release operation.

It should be noted that the processing unit 601 may be realized by a processor, the interrupt triggering unit 603 may be realized by a touch panel of a touch screen, and the fingerprint capturing unit 602 may be realized by a fingerprint sensor.

A non-transitory computer readable storage medium storing computer programs may be disclosed. The computer programs may be executable by a computer to perform part or all of the actions of the fingerprint capturing method described in the above embodiments, such as the actions of: when a luminance of a fingerprint capturing area of a touch screen is a first luminance value, adjusting the luminance of the fingerprint capturing area to a second luminance value in response to detecting a touch operation on the fingerprint capturing area, wherein the second luminance value is greater than the first luminance value; and capturing a fingerprint image corresponding to the touch operation under the second luminance value via a fingerprint sensor. The computer may include a mobile terminal.

The embodiment of the present disclosure may further provide a computer program product including a non-transitory computer-readable storage medium storing computer programs. The computer programs may be executable by a computer to perform part or all of the actions of any fingerprint capturing method as described in the above embodiments. The computer program product may be a software installation package, and the computer may include a mobile terminal.

It should be noted that, for simple description, the aforementioned method embodiments are described as a series of action combinations, while those skilled in the art should be aware that the present disclosure is not limited by the described sequence of the actions. According to the present disclosure, actions may be performed in other order or simultaneously. Secondly, those skilled in the art should also be aware that the embodiments described in the specification are exemplary embodiments, and the actions and modules involved are not necessary for the present disclosure.

In the above embodiments, the description of each embodiment has its own emphasis, and the parts that are not detailed in an embodiment may be referred to the relevant description of other embodiments.

In several embodiments provided in the present disclosure, the disclosed apparatus may be implemented in other ways. For example, the apparatus embodiments described above are merely illustrative. For example, the divisions of the above-mentioned units may be only logical functional divisions and there may be other ways of dividing in actual implementations. For example, multiple units or components can be combined or integrated into another system, or some features may be ignored or not executed. The coupling, direct coupling, or communication connection shown or discussed may be indirect coupling or communication connection through some interfaces, apparatuses, or units, and may be electrical or in other forms.

The units described above as separate components may or not be physically separated, and the components displayed as units may or not be physical units, that is, they may be located in one place, or they may be distributed over multiple network units. Some or all of the units may be selected according to actual needs to achieve the purpose of the present embodiments.

In addition, each functional unit in each embodiment of the present disclosure may be integrated in one processing unit, may be physically presented separately for each unit, or may be integrated in one unit by two or more units. The integration units mentioned above may be realized either in the form of hardware or in the form of software functional units.

The integrated units may be stored in a computer readable memory if it is implemented in the form of software functional units and sold or used as an independent product. Based on this understanding, the technical solutions of the present disclosure in essence, or part or all of the technical solutions contributing to the existing technology, may be embodied in a form of software products. The computer software product stored in a memory may include a number of instructions to allow a computer device (such as a personal computer, a server, or a network devices) to perform all or part of the actions of the method described above in each embodiment of the present disclosure. The memory mentioned above may include a U disk, a Read-Only Memory (ROM), a Random Access Memory (RAM), a mobile hard disk, a magnetic disk, a CD, or other medium that may store program codes.

Those skilled in the art may understand that all or part of the actions in the various methods of the above embodiments may be accomplished by directing relevant hardware through a program that may be stored in a computer readable memory. The memory may include a flash disk, a read-only memory (ROM), a RAM, a magnetic disk, a CD, etc.

The above-mentioned embodiments of the present disclosure are described in detail. The specific examples are used to illustrate the principle and implementation manners of the present disclosure. The above illustrations are only used to facilitate understanding of the method and ideas of the present disclosure. According to the ideas of the present disclosure, specific implementation manners and application scope may be changed by the general technical personnel in the field. In summary, the contents of the specification should not be construed as restrictions of the present disclosure.

## Claims

1. A fingerprint capturing method, applied to an electronic device comprising a touch screen, the method comprises:
when a luminance of a fingerprint capturing area of the touch screen is a first luminance value, adjusting the luminance of the fingerprint capturing area to a second luminance value in response to detecting a touch operation on the fingerprint capturing area, wherein the second luminance value is greater than the first luminance value (101); and
capturing a fingerprint image corresponding to the touch operation under the second luminance value via a fingerprint sensor (102), wherein the fingerprint sensor is disposed below the fingerprint capturing area.

2. The method according to claim 1, further comprising: determining a touch position of at least one finger on the fingerprint capturing area in response to detecting the touch operation on the fingerprint capturing area;
wherein adjusting the luminance of the fingerprint capturing area to the second luminance value comprises: adjusting a luminance of the touch position to the second luminance value (403).

3. The method according to claim 2, further comprising:, adjusting a luminance of an area in the fingerprint capturing area except the touch position to a third luminance value in response to adjusting the luminance of the touch position to the second luminance value (404), where the third luminance value is lower than the first luminance value or the second luminance value.

4. The method according to any one of claims 1-3, wherein the fingerprint capturing area is illuminated to the first luminance value under at least one of the following conditions: the touch screen displays a lock release interface, a predetermined touch operation on the touch screen is detected, a pressing operation on a HOME button is detected, a predetermined gesture is detected, and a predetermined tapping signal is detected.

5. The method according to any one of claims 1-4, further comprising:
parsing the fingerprint image of at least one finger performing the touch operation to obtain at least one fingerprint feature set (407);
when the number of the fingers is greater than or equal to two, determining the fingerprint feature set with the most fingerprint features as a target fingerprint feature set, matching the target fingerprint feature set with pre-stored fingerprint feature sets (408).

6. The method according to claim 5, wherein the method further comprises: performing at least one of following actions when the target fingerprint feature set matches a pre-stored fingerprint feature set:
starting applications corresponding to the number of the fingers touched on the fingerprint capturing area;
starting an application corresponding to the target fingerprint feature set;
starting an application corresponding to a touch position that corresponds to the target fingerprint feature set; and
displaying a system desktop on the touch screen and displaying an application icon of a target application.

7. The method according to any one of claims 1-6, further comprising: when a luminance of a fingerprint capturing area of the touch screen is a first luminance value, adjusting the luminance of an area in the touch screen except the fingerprint capturing area to a fourth luminance value which is lower than the first luminance value or the second luminance value.

8. The method according to any one of claims 1-7, wherein the electronic device further includes a processor, the touch screen further includes a touch panel; and the processor illuminates the fingerprint capturing area to the first luminance value;
adjusting the luminance of the fingerprint capturing area to the second luminance value, and capturing the fingerprint image corresponding to the touch operation under the second luminance value via the fingerprint sensor, comprises:
transmitting, by the touch panel of the touch screen, an interrupt request to the processor;
in response to receiving the interrupt request, adjusting, by the processor, the luminance of the fingerprint capturing area to the second luminance value, and instructing, by the processor, the fingerprint sensor to capture the fingerprint image; and
capturing, by the fingerprint sensor, the fingerprint image of at least one finger irradiated by light emitted from the fingerprint capturing area.

9. The method according to claim 8, further comprising: determining, by the processor, a touch position of the at least one finger in response to receiving the interrupt request;
wherein adjusting, by the processor, the luminance of the fingerprint capturing area to the second luminance value comprises: adjusting, by the processor, the luminance of the touch position to the second luminance value.

10. A fingerprint capturing apparatus, applied to an electronic device comprising a touch screen, the touch screen comprises a fingerprint capturing area, and the apparatus comprises:
a processing unit (601), used for illuminating the fingerprint capturing area to a first luminance value;
an interrupt triggering unit (603), used for transmitting an interrupt request to the processing unit (601) in response to detecting a touch operation on the fingerprint capturing area;
wherein the processing unit (601) is further used for adjusting a luminance of the fingerprint capturing area to a second luminance value after receiving the interrupt request, and instructing a fingerprint capturing unit (602) to capture a fingerprint image, wherein the second luminance value is greater than the first luminance value;
the fingerprint capturing unit (602), used for capturing the fingerprint image irradiated by light emitted from the fingerprint capturing area.

11. The apparatus according to claim 10, the processing unit (601) is used for determining a touch position of at least one finger on the fingerprint capturing area after receiving the interrupt request, and adjusting a luminance of the touch position to the second luminance value.

12. The apparatus according to claim 10, the processing unit (601) is further used for adjusting a luminance of an area in the fingerprint capturing area except the touch position to a third luminance value in response to adjusting the luminance of the touch position to the second luminance value, where the third luminance value is lower than the first luminance value or the second luminance value

13. The apparatus according to any one of claims 10-12, the processing unit (601) is used for illuminating the fingerprint capturing area to the first luminance value under at least one of the following conditions: the touch screen displays a lock release interface, a predetermined touch operation on the touch screen is detected, a pressing operation on a HOME button is detected, a predetermined gesture is detected, and a predetermined tapping signal is detected.

14. An electronic device comprising a touch screen, a processor and a memory storing one or more computer programs, wherein the one or more computer programs are executable by the processor to perform the method as claimed in any one of claims 1-9.

15. A non-transitory computer readable storage medium storing computer programs that are executable by a computer to perform the method as claimed in any one of claims 1-9.
